# EUROPEAN PATENT APPLICATION

(11) **EP 1 775 867 A2**
(43) Date of publication of application: **18.04.2007**
(21) Application number: 06021359.2
(22) Date of filing: 11.10.2006
(51) Int. Cl.: H04H 1/00

(54) **Method and apparatus for transmitting/receiving ESG in DVB system**

(30) Priority: 11.10.2005 KR 20050095757
(71) Applicant: Samsung Electronics Co., Ltd., Suwon-si, Gyeonggi-Do (KR)
(72) Inventor: Lee, Hye-Young, Yeongtong-gu Suwon-si Gyeonggi-do (KR); Song, Jae-Yeon, Yeongtong-gu Suwon-si Gyeonggi-do (KR); Ann, Jong-Hoon, Yeongtong-gu Suwon-si Gyeonggi-do (KR); Lee, Kook-Heui, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a method for transmitting an Electronic Service Guide (ESG) in a Digital Video Broadcasting (DVB) system, the method includes collecting ESG data to be transmitted; when a multi-stream mode is used in order to transmit the ESG data, setting parameters to be transmitted, and setting the number of IP streams to be used in the multi-stream mode; setting a signaling field indicating use or non-use of at least one partitioning rule in each IP stream; setting at least one of a start field value and an end field value for all fields of said each IP stream used according to a corresponding partitioning rule; if setup of the start field value and the end field value is completed, encoding a partition declaration field of an ESG init container including the set values; and transmitting the encoded ESG data to a terminal.

## Description

### BACKGROUND OF THE INVENTION

### 1. Field of the Invention

The present invention relates to a Digital Video Broadcasting (DVB) system, and more particularly to a method and an apparatus for more efficiently transmitting and demodulating an Electronic Service Guide (ESG) data in transmission/reception of the ESG data.

### 2. Description of the Related Art

A DVB system is digital broadcasting technology in Europe, which corresponds to a transmission standard for supporting a mobile/portable digital multimedia service as well as existing digital broadcasting.

In the DVB system, it is possible to multiplex MPEG 2 Transport Stream (TS)-based broadcasting data and simultaneously transmit Internet Protocol (IP)-based data streams. In the DVB system, various services can be multiplexed in a single IP stream for transmission, and a terminal can receive the data of the transmitted IP stream, perform demultiplexing of individual service so as to demodulate the service, and output the demodulated service to a user through a screen. The user requires information about the type of the various services provided by the DVB system, the content of each service, etc.

In the DVB system, ESG data exists in order to report information about each service. The ESG data includes time information about a specific service, related content information, information necessary for receiving the content, information necessary for purchasing the content, etc. The ESG data configures a data model for efficient transmission of the information, and determines transmission data based on the data model.

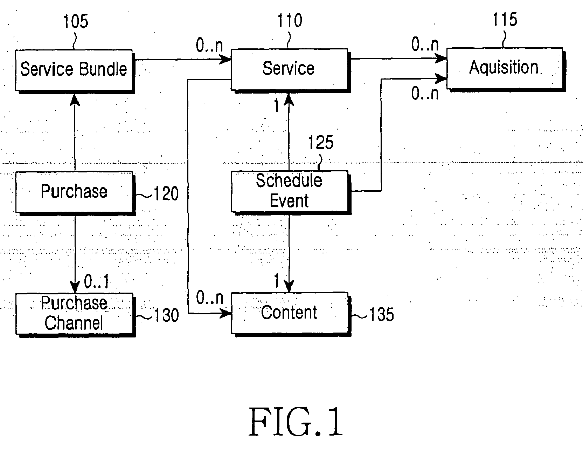

FIG. 1 is a block diagram structurally illustrating the data model of an ESG.

Referring to FIG. 1, each block denotes the fragment of an ESG. The ESG data model includes a service fragment 110, a Schedule Event fragment 125, a Content fragment 135, an Acquisition fragment 115, a Service Bundle fragment 105, a Purchase fragment 120 and a Purchase Channel fragment 130.

The service fragment 110 includes a description about the entire service, the schedule Event fragment 125 denotes service information according to time, and the acquisition fragment 115 includes information necessary for actually receiving data. Service Bundle fragment 105 includes information about a service bundle in which a plurality of services are bundled and provided, purchase fragment 120 reports cost information for purchasing the service bundle, and the Purchase Channel fragment 130 reports information about a system, which must be used in order to acquire the right for the purchase.

Each fragment of the data model may refer to other fragments. The reference signifies that a current fragment reports information related to its own fragment by using information transmitted from other fragments. When one service includes multiple contents, service fragment 110 includes a description about the entire service, e.g. the name of the service and the language used in the service, but does not include a description about a content transmitted through the service. Instead, service fragment 110 refers to content fragment 135 of a corresponding content. Further, various information required when a terminal receives the service, e.g. session information used in a transport protocol, can be obtained by receiving and demodulating the acquisition fragment 115 referred to by service fragment 110.

When one fragment refers to another, the IP of the referred fragment must be contained within the information of the referring fragment. When service fragment 110 refers to a specific content, service fragment 110 clearly defines the ID of the referred content fragment 135 within service fragment 110.

The ESG data model is transmitted to a terminal through a separate IP stream at a certain time separate from an actual data stream. Accordingly, a service provider can transmit information, which a user must know before actually receiving a service, by using the ESG data model. Further, the ESG data model may be used in various purposes in addition to a guide about programs.

When the ESG data is transmitted through a separate IP stream, the ESG data may be transmitted through a single IP stream, or one or more IP streams if the amount of ESG data is large. A case of using the single IP stream will be referred to as a single stream mode, and a case of using one or more IP streams will be referred to as a multi-stream mode. In the use of the multi-stream mode, there exists a rule for partitioning the fragments into each IP stream. This rule denotes partitioning and allocating the fragments into each IP stream in consideration of a relation among the fragments when a plurality of fragments exists. The rule denotes partitioning information in a DVB system. The partitioning information may include time, service IDs, etc.

For example, when ESG data is transmitted using two IP streams, it is possible to set partitioning in such a manner that the ESG data from a current time to 12 hours later is transmitted using the first one of the two IP streams, and the ESG data during the second 12 hours is transmitted using the last one of the two IP streams. In such a case, the partitioning rule of each IP stream is time and the value of the partitioning is 12 hours. The partitioning rule may have one or more values and the partitioned data is transmitted using each IP stream.

When the multi-stream mode is used, a receiver must acquire information about the number of IP streams used in order to transmit the ESG data, or a partitioning rule used in one or more IP streams. Accordingly, when the partitioning is used, information about required parameters must be transmitted from a transmitter to a receiver.

When ESG data is transmitted using the partitioning rule, the ESG data denotes ESG fragments, and these ESG fragments are transmitted through an ESG container. The container corresponds to a set of the ESG fragments, includes one or more ESG fragments, and is transmitted together with headers describing the characteristics of each fragment. Accordingly, it is necessary to transmit the initial information required when a receiver demodulates the ESG fragments transmitted through the ESG container, and the initial information is also transmitted through the ESG container. A container for transmitting the initial information will be referred to as an "ESG init" container. The ESG init container includes various fields. Among them, a field for transmitting the partitioning information. This field is included will be referred to as a partition declaration. When ESG data uses the multi-stream mode, a receiver can become aware of both information about each IP stream and partitioning information, which is used in each IP stream, through information provided by the partition declaration.

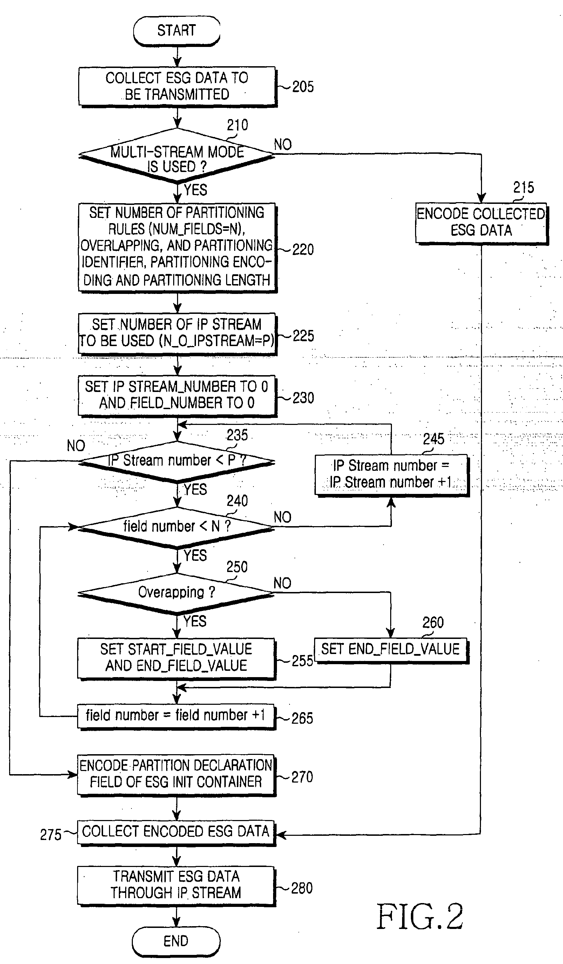

FIG. 2 is a flow diagram illustrating the operation of a transmitter for transmitting the ESG data in the multi-stream mode according to the prior art.

Referring to FIG. 2, in step 205, the transmitter collects ESG data to be transmitted. In step 210, the transmitter determines whether to use the multi-stream mode when transmitting the ESG data. When the transmitter does not use the multi-stream mode, step 215 is performed. The transmitter encodes the collected ESG data according to each type of data, and step 275 is performed. When the transmitter uses the multi-stream mode, step 220 is performed. The transmitter sets the parameters necessary for data transmission.

The parameters required when the multi-stream mode is used include the number N of used partitioning rules (i.e. num_field), overlapping, and a used partitioning identifier (i.e. field_identifier), partitioning encoding (i.e. field_encoding) and partitioning length (i.e. field_length). The number of partitioning rules is a parameter reporting the number of used partitioning rules, the overlapping is a parameter reporting the overlap or non-overlap of partitioning, and the partitioning identifier is a parameter reporting rules used by each partitioning. The partitioning encoding is a parameter reporting a scheme in which each partitioning value has been encoded, and the partitioning length is a parameter reporting the number of bytes of a field indicating each partitioning value. Each partitioning will be referred to as one field.

After setting the parameters, the transmitter sets the number of IP streams, which are to transmit the ESG data in step 225 (n_o_IPStream = P). After setting the basic parameters, the transmitter sets the IP stream_number to 0, and the field_number to 0 in order to allocate an ESG fragment to each IP stream in step 230.

In step 235, the transmitter determines if the set IP stream_number is smaller than the total number P of IP streams to be used. If the IP stream_number is less than P, the transmitter determines if the field_number is less than the total number N of used partitionings in step 240. If the field_number is less than N, the transmitter determines if the overlap of the partitioning exists in step 250. If the overlap of the partitioning exists, the transmitter sets both a start value "start_field_value" and an end value "end_field_value" in step 255. The start value "start_field_value" and the end value "end_field_value" correspond to partitioning information values.

For example, when the partitioning identifier has been set as time, the start value "start_field_value" and the end value "end_field_value" indicate reference time in which fragments within each IP stream are partitioned. That is, fragments from a time, which is indicated by the start value "start_field_value," to a time, which is indicated by the end value "end_field_value," correspond to fragments transmitted through IP streams. In another example, when the partitioning identifier has been set as a service ID, the start value "start_field_value" and the end value "end_field_value" indicate a service ID number in which fragments within each IP stream are partitioned. Fragments from a service ID, which is indicated by the start value "start_field_value," to a service ID, which is indicated by the end value "end_field_value," correspond to fragments transmitted through IP streams.

As a result of the determination in step 250, if the overlap of the partitioning does not exist, the transmitter sets only the end value "end_field_value," instead of the start value "start_field_value," in step 260. If the overlap of the partitioning does not exist, the transmitter does not separately declare the start value "start_field_value" because the start value "start_field_value" is equal to "(the end value end_field_value of a previous IP stream) + 1".

If the setup of the start value "start_field_value" and the end value "end_field_value" is completed, the transmitter increases the field number value by one in order to set both a start value "start_field_value" and an end value "end_field_value" for a subsequent partitioning rule in step 265. The transmitter determines again if the "field_number" value is smaller than the number N (i.e. num_field value) of used partitionings in step 240.

If the "field_number" value is less than the number N of used partitionings as a result of the determination in step 240, step 245 is performed because the setup of the start value "start_field_value" and the end value "end_field_value" for the partitioning used in each of the IP streams has been completed. That is, the transmitter increases the IP stream number value by one in order to set both a start value "start_field_value" and an end value "end_field_value" for partitioning to be used in a subsequent IP stream. Then, step 235 is performed. That is, the transmitter determines again if the IP stream number value is less the number P of used IP streams.

If the IP stream number value is greater than the number P of used IP streams as a result of the determination in step 230, the transmitter encodes the partition declaration field of the ESG init container by using the set parameter values in step 270 because the setup of all parameters for IP streams to be used has been completed. In step 275, the transmitter collects all encoded ESG data as well as the encoded partition declaration field of the ESG init container. In step 280, the transmitter transmits the collected ESG data through P number of IP streams.

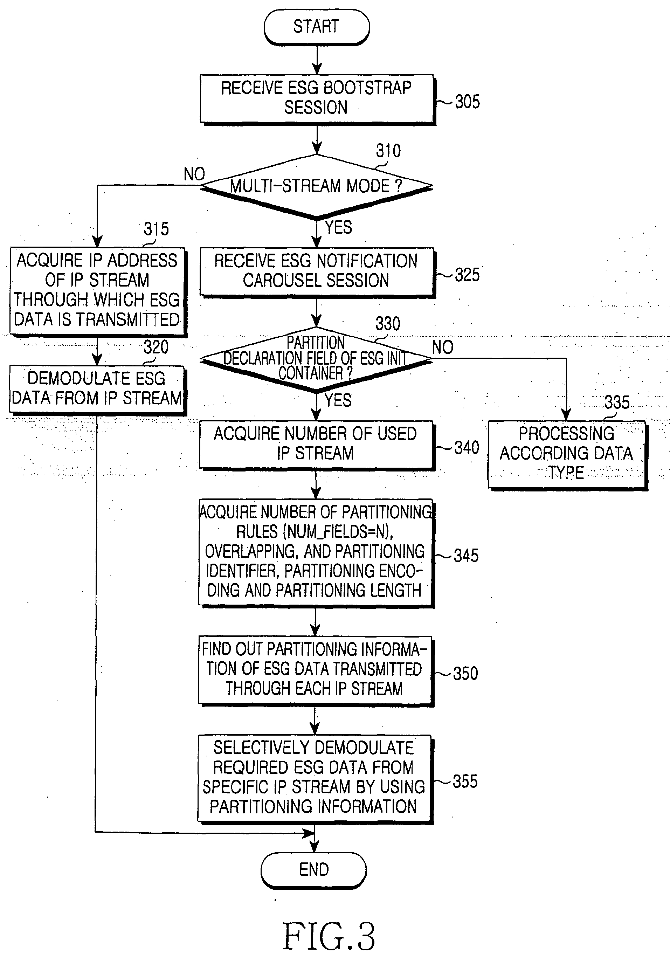

FIG. 3 is a flow diagram illustrating the operation of a receiver for receiving the ESG data in the multi-stream mode according to the prior art.

Referring to FIG. 3, in step 305, the receiver receives an ESG bootstrap session in order to demodulate the ESG data. The ESG bootstrap session is a session through which basic information is transmitted, the basic information being required when the receiver acquires information about an IP stream transmitting the ESG data. The IP address of the ESG bootstrap session is always fixed, and the receiver already knows the fixed IP address. Accordingly, when the receiver is to demodulate the ESG data, the receiver must receive the ESG bootstrap session before anything else.

If the ESG bootstrap session is received, the receiver can become aware of whether the ESG data is currently transmitted through the multi-stream mode or the single-stream mode. In step 310, the receiver confirms the stream mode. When the single-stream mode is used, the receiver acquires the IP address of an IP stream through which the ESG data is transmitted from the ESG bootstrap session in step 315. In step 320, the receiver can receive the IP stream, through which the ESG data is transmitted, by using the acquired IP address, and demodulate the ESG data.

As a result of the confirmation in step 310, when the multi-stream mode is used, the receiver can acquire the IP address of an ESG notification carousel session from the ESG bootstrap session in step 325. In the case in which ESG data is transmitted using the multi-stream mode, the ESG notification carousel session is a session for transmitting control information about a plurality of IP streams through which the ESG data is transmitted, and the ESG init container is transmitted through the ESG notification carousel session. After receiving the ESG notification carousel session, the receiver finds the partition declaration field of the ESG init container in step 330.

If the partition declaration field of the ESG init container has been received, the receiver acquires the total number of IP streams currently used in order to transmit the ESG data in step 340, and acquires parameter values necessary for the multi-stream mode in step 345. The parameter includes the number of used partitioning rules, overlapping, and a partitioning identifier, partitioning encoding and partitioning length. Each parameter is described in detail in FIG. 2.

After acquiring the parameter values, the receiver finds out partitioning information regarding the partitioning rule of the ESG data transmitted through each stream, IP streams through which fragments corresponding to each partitioning are transmitted, etc., in step 350. In step 355, the receiver selectively demodulates required ESG data from a specific IP stream by using the partitioning information. In the selective demodulation, transmitted ESG data is not demodulated in whole but only partially demodulated. For example, in the case in which the partitioning rule is time, an ESG fragment from the current time to 12 hours later is transmitted through one IP stream and an ESG fragment during the second 12 hours is transmitted through another IP stream, the receiver can receive only one of the two IP streams and first demodulate only the ESG data during 12 hours according to its own performance, instead of demodulating all ESG data during 24 hours.

The process for encoding the partition declaration field of the ESG init container when the multi-stream mode is used according to the prior art as described above will be briefly described.. If one or more partitioning rules are used, it is essentially necessary to declare both a start value "start_field_value" and an end value "end_field_value," which correspond to each partitioning rule, every IP stream.

Even when one or more partitioning rules are used, it is possible to set an ESG transmission scheme so that each IP stream transmits only a fragment corresponding to a specific partitioning rule. For example, when four IP streams are used and two partitioning rules (time and service ID) are used, the first and second IP streams distribute fragments according to the time (first partitioning rule) and the third and fourth IP streams distribute fragments according to the service ID (second partitioning rule), thereby transmitting ESG data.

In such a case, when the ESG data is transmitted using the multi-stream mode according to the prior art, if only one partitioning rule is applied to one IP stream, there may occur an error in which it is essentially necessary to set both a start value "start_field_value" and an end value "end_field_value" corresponding to partitioning not being used in each of the IP streams.

### SUMMARY OF THE INVENTION

Accordingly, the present invention has been made to solve at least the above-mentioned problems occurring in the prior art, and an object of the present invention is to provide a method and an apparatus for configuring a signaling field used in a multi-stream mode in order to more efficiently transmit and demodulate ESG data when the ESG data is transmitted/received using the multi-stream mode in a DVB system.

In accordance with one aspect of the present invention, there is provided a method for transmitting an Electronic Service Guide (ESG) in a Digital Video Broadcasting (DVB) system, the method including collecting ESG data to be transmitted; when a multi-stream mode is used in order to transmit the ESG data, setting parameters to be transmitted, and setting the number of IP streams to be used in the multi-stream mode; setting a signaling field indicating use or non-use of at least one of multiple predetermined partitioning rules in each IP stream; setting at least one of a start field value and an end field value for all fields of each said IP stream used according to a corresponding partitioning rule; if setup of the start field value and the end field value is completed, encoding a partition declaration field of an ESG init container including the set values; and transmitting the encoded ESG data to a terminal.

In accordance with another aspect of the present invention, there is provided a method for receiving an Electronic Service Guide (ESG) in a Digital Video Broadcasting (DVB) system, the method including receiving basic information necessary for receiving ESG data through an ESG bootstrap session; determining if the ESG data has been transmitted in a multi-stream mode; if the ESG data has been transmitted in the multi-stream mode, acquiring an IP address of an ESG notification carousel session from the basic information, and confirming a partition declaration field of an ESG init container; confirming the number of IP streams in the multi-stream mode through the partition declaration field of the ESG init container, and determining if a partitioning rule is used in each IP stream; acquiring parameter values from the partition declaration field, and acquiring partitioning information of ESG data transmitted through said each IP stream, the parameter values being required when the partitioning rule is used; and partitioning a specific IP stream to at least one field by using the acquired partitioning information, and selectively demodulating required ESG data from a specific field.

In accordance with further another aspect of the present invention, there is provided an apparatus for transmitting an Electronic Service Guide (ESG) in a Digital Video Broadcasting (DVB) system, the apparatus includes an IP encapsulator for encapsulating and outputting at least one ESG IP stream including an input data IP stream, a parameter in which the partitioning rule used in each IP stream has been set, and a parameter required when a multi-stream mode is used; a multiplexer for multiplexing the encapsulated IP stream and TV streams; and a modulator for modulating the multiplexed data and transmitting the modulated data to a receiver.

In accordance with yet another aspect of the present invention, there is provided an apparatus for receiving an Electronic Service Guide (ESG) in a Digital Video Broadcasting (DVB) system, the apparatus includes a demodulator for demodulating signals received from a transmitter; a demultiplexer for demultiplexing the demodulated signals and dividing the demultiplexed signals into an IP encapsulated packet and a MPEG 2 transport stream packet; an IP encapsulator for demodulating the IP encapsulated packet into an IP stream and dividing the demodulated IP stream into an ESG stream and a data stream; an ESG processor for, when ESG data has been transmitted in a multi-stream mode as a result of analyzing the ESG data, determining if each partitioning rule is used in each IP stream from the ESG data, receiving a parameter required when the multi-stream mode is used, analyzing the received parameter, and demodulating the ESG data; a data processor for processing the data stream and the transport stream packet; and a user interface unit for outputting user request information output from the ESG processor and the data processor.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram structurally illustrating the data model of an ESG;
FIG. 2 is a flow diagram illustrating the operation of a transmitter for transmitting ESG data in a multi-stream mode according to the prior art;
FIG. 3 is a flow diagram illustrating the operation of a receiver for receiving ESG data in a multi-stream mode according to the prior art;
FIG. 4 is a flow diagram illustrating the operation of a transmitter for transmitting ESG data in a multi-stream mode according to the present invention;
FIG. 5 is a flow diagram illustrating the operation of a transmitter for transmitting ESG data in a multi-stream mode according to the present invention;
FIG. 6 is a flow diagram illustrating the operation of a receiver for receiving ESG data in a multi-stream mode according to the present invention;
FIG. 7 is a flow diagram illustrating the construction of a transmitter according to the present invention; and
FIG. 8 is a flow diagram illustrating the construction of a receiver according to the present invention.

### DETAILED DESCRIPTION OF THE PREFERRED EMBODIMENT

Preferred embodiments of the present invention will be described in detail herein below with reference to the accompanying drawings. In the following description, a detailed description of known functions and configurations incorporated herein will be omitted when it may obscure the subject matter of the present invention. Terms described in the following description are defined by taking functions thereof into consideration, so they may vary according to custom and usage. Accordingly, the terms must be defined based on the entire contents of the present application.

The present invention provides two embodiments in order to efficiently set the parameter values of a signaling field transmitted for reporting a partitioning rule used in each IP stream when a multi-stream mode is used in the transmission of ESG data.

The first embodiment provided by the present invention corresponds to a method for declaring a new parameter for reporting whether each partitioning rule is used in each IP stream in the transmission of the parameter values.

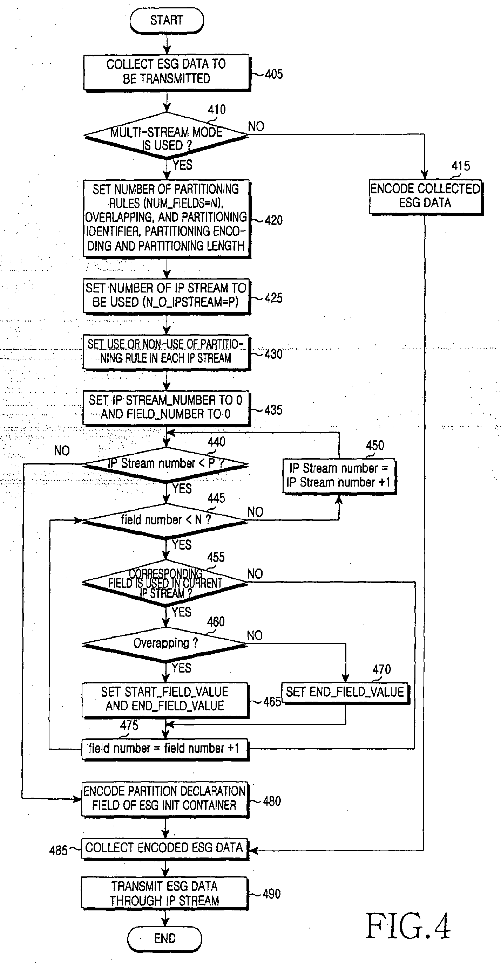

FIG. 4 is a flow diagram illustrating the operation of a transmitter according to the first embodiment of the present invention. Referring to FIG. 4, in step 405, the transmitter collects ESG data to be transmitted. In step 410, the transmitter determines whether to use the multi-stream mode when transmitting the ESG data. When the transmitter does not use the multi-stream mode, step 415 is performed. The transmitter encodes the collected ESG data according to each type of data, and step 485 is performed. When the transmitter uses the multi-stream mode, step 420 is performed. The transmitter sets the parameters to be transmitted. The parameters required when the multi-stream mode is used include the number N of used partitioning rules (i.e. num_field), overlapping, and a used partitioning identifier (i.e. field_identifier), partitioning encoding (i.e. field_encoding) and partitioning length (i.e. field_length). Each parameter is described in detail in FIG. 2.

After setting the parameters, the transmitter sets the number P of IP streams which are to transmit the ESG data in step 425. After setting the basic parameters, the transmitter sets the use or non-use of a partitioning rule in each IP stream in step 430. The transmitter declares one new parameter. If the parameter has a value of 1, it means that the partitioning rule is used in each of the IP streams. If the parameter has a value of 0, it means that the partitioning rule is not used in each of the IP streams.

In step 435, the transmitter sets the IP "stream_number" to 0, and the "field_number" to 0 in order to allocate an ESG fragment to each IP stream. In step 440, the transmitter determines if the set IP "stream_number" is smaller than the total number P of IP streams to be used. If the IP "stream_number" is less than P, the transmitter determines if the "field_number" is less than the total number N of used partitionings in step 445. If the "field_number" is less than N, the transmitter determines if the field, i.e. the partitioning rule, is used in each of the IP streams in step 455. The criterion for the determination of the new parameter is provided by the present invention. If the new parameter has a value of 1 as described above, it means that the partitioning rule is used in each of the IP streams. If the parameter has a value of 0, it means that the partitioning rule is not used in each of the IP streams. When the partitioning rule is not used, the transmitter increases the field number by one in order to determine a subsequent partitioning rule in step 475. Then, step 445 is performed. That is, the transmitter determines again if the "field_number" value is less than the total number N of used partitionings.

If the "field_number" is less than N and the partitioning rule is used in step 455, the transmitter determines if the overlap of the partitioning exists in step 460. If the overlap of the partitioning does not exist, the transmitter sets only an end value "end_field_value" in step 470. If the overlap of the partitioning exists, the transmitter sets both a start value "start_field_value" and an end value "end_field_value" in step 465.

The start value "start_field_value" and the end value "end_field_value" correspond to partitioning information values. For example, when the partitioning identifier has been set as time, the start value "start_field_value" and the end value "end_field_value" indicate a reference time in which fragments within each IP stream are partitioned. Fragments from a time, which is indicated by the start value "start_field_value," to a time, which is indicated by the end value "end_field_value," correspond to fragments transmitted through IP streams. In another example, when the partitioning identifier has been set as a service ID, the start value "start_field_value" and the end value "end_field_value" indicate a service ID number in which fragments within each IP stream are partitioned. That is, fragments from a service ID, which is indicated by the start value "start_field_value," to a service ID, which is indicated by the end value "end_field_value," correspond to fragments transmitted through IP streams.

If the overlap of the partitioning does not exist, the transmitter does not separately declare the start value "start_field_value" because the start value "start_field_value" is equal to "(the end value end_field_value of a previous IP stream) + 1", in step 470. If the setup of the start value "start_field_value" and the end value "end_field_value" is completed, the transmitter increases the field number value by one in order to set both a start value "start_field_value" and an end value "end_field_value" for a partitioning rule in step 475. Then, the transmitter determines again if the "field_number" value is less than the number N (i.e. num_field value) of used partitionings in step 445.

If the "field_number" value is less than the number N of used partitionings as a result of the determination in step 445, step 450 is performed because the setup of the start value "start_field_value" and the end value "end_field_value" for partitioning used in each of the IP streams has been completed. That is, the transmitter increases the IP stream number value by one for the setup of both a start value "start_field_value" and an end value "end_field_value" for partitioning to be used in a subsequent IP stream. Then, step 440 is performed. That is, the transmitter determines again if the IP stream number value is smaller than the number P of used IP streams.

If the IP stream number value is greater than the number P of used IP streams as a result of the determination in step 440, the transmitter encodes the partition declaration field of the ESG init container by using the set parameter values in step 480 because the setup of all parameters for IP streams to be used has been completed. In step 485, the transmitter collects all encoded ESG data as well as the encoded partition declaration field of the ESG init container. In step 490, the transmitter transmits the collected ESG data through P number of IP streams.

The partitioning rule information is transmitted through the partitioning declaration field of the ESG init container fields. The partitioning declaration field according to the first embodiment has a syntax structure as illustrated in Table 1.

**Table 1**

| Syntax | | | | No. of Bits | Mnemonic |
|---|---|---|---|---|---|
| ESG Session Partition Declaration{ | | | | | |
| num fields | | | | 8 | uimsbf |
| Reserved | | | | 8 | bslbf |
| for (k = 0; k< num fields;k++) { | | | | | |
| | field identifier [k] | | | 16 | bslbf |
| | field encoding [k] | | | 16 | bslbf |
| | field length [k] | | | 8 | uimsbf |
| | field_overlapping [k] | | | 1 | bslbf |
| | Reserved | | | 7 | bslbf |
| } | | | | | |
| N_o_IPStreams | | | | 8 | |
| IPVersion6 | | | | 1 | bslbf |
| Reserved | | | | 7 | bslbf |
| for (i = 0; i< n_o IPStreams;i++) { | | | | | |
| | IPStreamID | | | 8 | uimsbf |
| | if(IPVersion6){ | | | | |
| | | | ESGSourceAddress[i] | 128 | bslbf |
| | | | IPAddress[i] | 128 | bslbf |
| | }else{ | | | | |
| | | | ESGSourceAddress[i] | 32 | bslbf |
| | | | IPAddress[i] | 32 | bslbf |
| | } | | | | |
| | Port[i] | | | 16 | uimsbf |
| | SessionID[i] | | | 16 | uimsbf |
| | for (k = 0; k< num_fields;k++) { | | | | |
| | | available[i] [k] | | 1 | bslbf |
| | | Reserved | | 7 | bslbf |
| | | if (available[i] [k]) { | | | |
| | | | if (field_overlapping [k]) { | | |
| | | | start_field_value [i] [k] | field_length [k] | bslbf |
| | | | } | | |
| | | | end_field_value [i] [k] | field_length [k] | bslbf |
| | } | | | | |
| } | | | | | |

Referring to Table 1, according to the present invention, in the syntax, a new variable has been added to each field in order to report whether each field, i.e. each partitioning rule, has been used in each of the IP streams. In Table 1, the syntax proposes a name "available" as the variable for reporting whether each partitioning rule has been used, and there is no limitation in the name. When configuring the syntax, it is possible to declare the variable "available" with another name and to allow it to perform the same function.

The prior art uses one variable in order to report overlap or non-overlap. However, the present invention proposes a syntax for declaring an overlapping variable for each field in order to report overlap or non-overlap for each partitioning rule. In the syntax according to the present invention, a variable "field_overlapping" is declared for each field and the overlap or non-overlap of each field is independently provided through the variable "field_overlapping."

Next, the present invention provides a method for allocating a predetermined value to a start value "start_field_value" and an end value "end_field_value," which are declared for each partitioning rule, in order to report whether each partitioning rule is used in each IP stream.

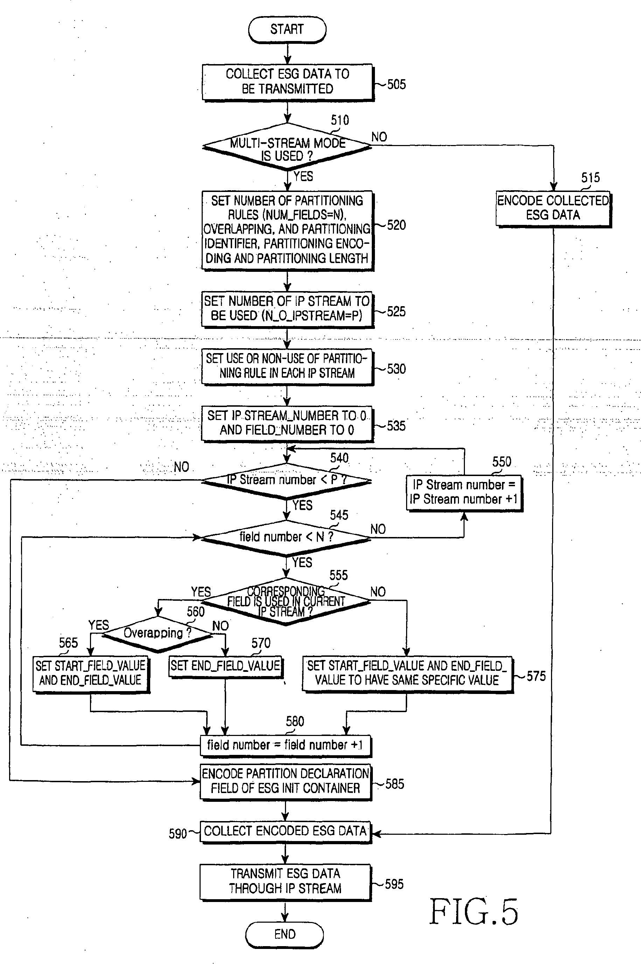

FIG. 5 is a flow diagram illustrating the operation of a transmitter according to the present invention. Referring to FIG. 5, in step 505, the transmitter collects ESG data to be transmitted. In step 510, the transmitter determines whether to use the multi-stream mode when transmitting the ESG data. When the transmitter does not use the multi-stream mode, step 515 is performed. The transmitter encodes the collected ESG data according to each type of data, and step 590 is performed. When the transmitter uses the multi-stream mode, step 520 is performed. The transmitter sets parameters to be transmitted.

The parameters required when the multi-stream mode is used include the number of used partitioning rules (i.e. num_field), overlapping, and a used partitioning identifier (i.e. field_identifier), partitioning encoding (i.e. field_encoding) and partitioning length (i.e. field_length). Each parameter is described in detail in FIG. 2.

After setting the parameters, the transmitter sets the number P of IP streams, which are to transmit the ESG data in step 525. After setting the basic parameters, the transmitter sets the use or non-use of a partitioning rule in each IP stream in step 530. In step 535, the transmitter sets an IP "stream_number" to 0, and a "field_number" to 0 in order to allocate an ESG fragment to each IP stream. In step 540, the transmitter determines if the set IP "stream_number" is less than the total number P of IP streams to be used. If the IP "stream_number" is less than P, the transmitter determines if the "field_number" is smaller than the total number N of used partitionings in step 545. If the "field_number" is less than N, the transmitter determines if the partitioning rule is used in each of the IP streams in step 555.

If the partitioning rule is used in each of the IP streams, the transmitter determines if the overlap of the partitioning exists in step 560. If the overlap of the partitioning exists, the transmitter sets both a start value "start_field_value" and an end value "end_field_value" in step 565. The start value "start_field_value" and the end value "end_field_value" correspond to partitioning information values.

For example, when the partitioning identifier has been set as time, the start value "start_field_value" and the end value "end_field_value" indicate reference time in which fragments within each IP stream are partitioned. Fragments from a time, which is indicated by the start value "start_field_value," to a time, which is indicated by the end value "end_field_value," correspond to fragments transmitted through IP streams. In another example, when the partitioning identifier has been set as a service ID, the start value "start_field_value" and the end value "end_field_value" indicate a service ID number in which fragments within each IP stream are partitioned. Fragments from a service ID, which is indicated by the start value "start_field_value," to a service ID, which is indicated by the end value "end_field_value," correspond to fragments transmitted through IP streams.

If the overlap of the partitioning does not exist, the transmitter does not separately declare the start value "start_field_value" because the start value "start_field_value" is equal to "(the end value end_field_value of a previous IP stream) + 1" and sets only the end value "end_field_value" in step 570.

When the partitioning rule is not used in each of the IP streams in step 555, the transmitter sets the start value "start_field_value" and the end value "end_field_value" to have the same specific value in step 575. The start value "start_field_value" and the end value "end_field_value" do not indicate partitioning information values, but they are set to have a specific value having no special meaning so that they can perform a signaling role for indicating that the partitioning rule is not used in each of the IP streams. For example, when the start value "start_field_value" and the end value "end_field_value" have been set to have a specific value such as 9999, a receiver can recognize notification regarding the non-use of the partitioning rule.

Further, when the start value "start_field_value" and the end value "end_field_value" have been set to have a specific value of a string type such as "No URI", a receiver can recognize notification regarding the non-use of the partitioning rule. That is, once the specific value is preset between the transmitter and the receiver, it can have any type of data.

If the setup of the start value "start_field_value" and the end value "end_field_value" is completed, the transmitter increases a field number value by one in order to set both a start value "start_field_value" and an end value "end_field_value" for a subsequent partitioning rule in step 580. Then, the transmitter determines again if the "field_number" value is less than the number N (i.e. num_field value) of used partitionings in step 545.

If the "field_number" value is greater than N as a result of the determination in step 545, step 550 is performed because the setup of the start value "start_field_value" and the end value "end_field_value" for the partitioning used in each of the IP streams has been completed. That is, the transmitter increases the IP stream number value by one for the setup of both a start value "start_field_value" and an end value "end_field_value" for partitioning to be used in a subsequent IP stream. Then step 540 is performed. The transmitter determines again if the IP stream number value is less than the number P of used IP streams.

If the IP stream number value is greater than P as a result of the determination in step 540, the transmitter encodes the partition declaration field of the ESG init container by using the parameter values in step 585 because the setup of all parameters for IP streams to be used has been completed. In step 590, the transmitter collects all encoded ESG data as well as the encoded partition declaration field of the ESG init container. In step 595, the transmitter transmits the collected ESG data through P number of IP streams.

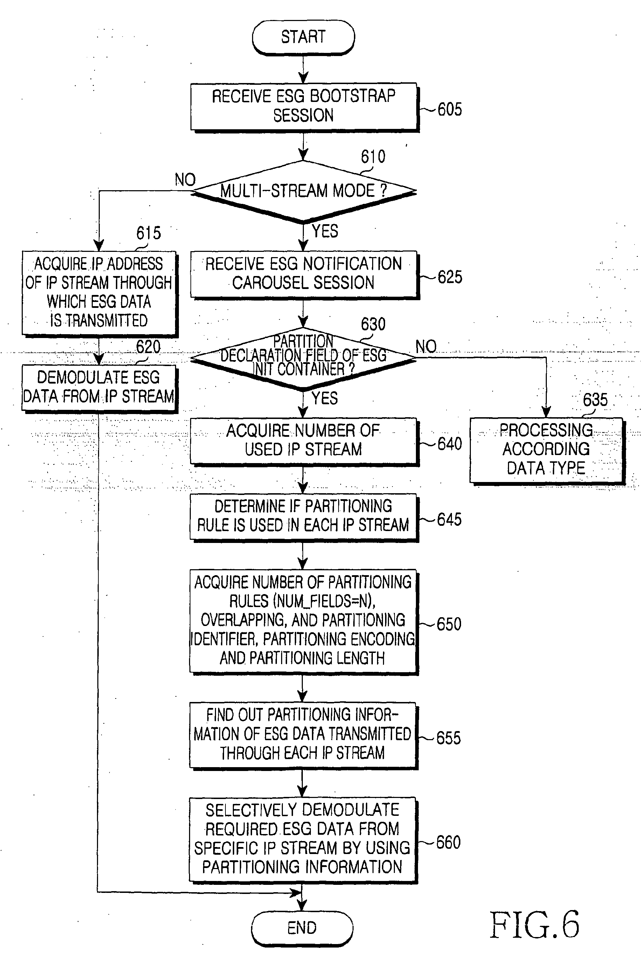

Since the different operations of receivers according to the present invention are equal to each other, the operations of receivers will be described with reference to one drawing, i.e. FIG. 6.

FIG. 6 is a flow diagram illustrating the operation of a receiver for receiving the ESG data in the multi-stream mode according to the present invention. Referring to FIG. 6, in step 605, the receiver receives an ESG bootstrap session in order to demodulate the ESG data. The ESG bootstrap session is a session through which basic information is transmitted, the basic information being required when the receiver acquires information about an IP stream transmitting the ESG data. The IP address of the ESG bootstrap session is always fixed, and the receiver already knows the fixed IP address. When the receiver is to demodulate the ESG data, the receiver must receive the ESG bootstrap session before anything else. If the ESG bootstrap session is received, the receiver can become aware of whether the ESG data is currently transmitted through the multi-stream mode or the single-stream mode.

In step 610, the receiver confirms the stream mode. When the single-stream mode is used, the receiver acquires the IP address of an IP stream through which the ESG data is transmitted from the ESG bootstrap session in step 615. In step 620, the receiver receives the IP stream, through which the ESG data is transmitted, by using the acquired IP address, and demodulates the ESG data.

As a result of the confirmation in step 610, when the multi-stream mode is used, the receiver acquires the IP address of an ESG notification carousel session from the ESG bootstrap session in step 625. For example, in the case in which ESG data is transmitted using the multi-stream mode, the ESG notification carousel session is a session for transmitting control information about a plurality of IP streams through which the ESG data is transmitted, and the ESG init container is transmitted through the ESG notification carousel session. After receiving the ESG notification carousel session, the receiver finds the partition declaration field of the ESG init container in step 630.

If the partition declaration field of the ESG init container has been received, the receiver acquires the total number of IP streams currently used in order to transmit the ESG data in step 640, and determines if each partitioning is used in each IP stream in step 645.

In a method for determining the use or non-use of the partitioning, it is possible to use the value of a new signaling field declared in order to report the use or non-use of each partitioning as described in one embodiment of the present invention, or it is possible to determine if the start value "start_field_value" and the end value "end_field_value" are set to have the same specific value according to another embodiment of the present invention. The specific value is a value preset between the transmitter and the receiver.

After determining the use or non-use of the partitioning, the receiver acquires remaining parameter values in step 650. The parameters required when the multi-stream mode is used include the number of used partitioning rules, overlapping, and a partitioning identifier, partitioning encoding and partitioning length. Each parameter is described in detail in FIG. 2.

After acquiring the parameter values, the receiver finds out partitioning information regarding the partitioning rule of the ESG data transmitted through each stream, IP streams through which fragments corresponding to each partitioning are transmitted, etc., in step 655. In step 660, the receiver selectively demodulates required ESG data from a specific IP stream by using the partitioning information.

Hereinafter, the constructions of the transmitter and the receiver according to the present invention will be described.

Since the same transmitter and receiver are used in the different aspects of the present invention, the constructions of the transmitter and the receiver will be commonly described.

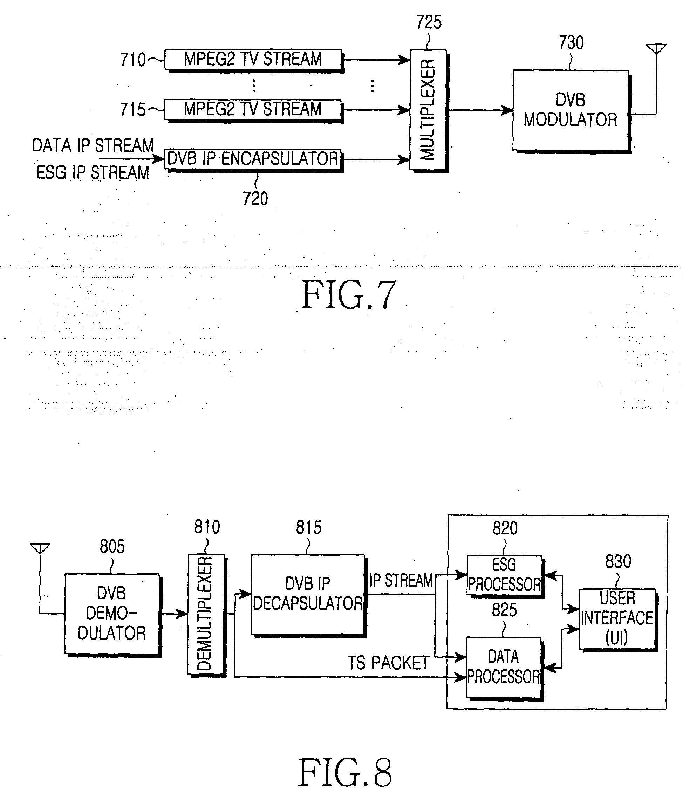

FIG. 7 is a flow diagram schematically illustrating the construction of the transmitter according to the present invention. Referring to FIG. 7, a plurality of MPEG-2 streams (TV streams) are input to the DVB transmitter, and IP streams are also input to the DVB transmitter via the multiplexer. The IP streams include IP-based service data. Also, ESG data generated in order to transmit service guide information about the MPEG-2 TV stream data and IP stream data is transmitted as IP streams. The ESG data may be transmitted as a single IP stream or may be transmitted using one or more multi-stream modes. The input IP stream is encapsulated into a MPEG-2 Transport Stream (TS) by a DVB IP encapsulator 720, and is multiplexed by a multiplexer 725 together with other MPEG-2 TSs (TV streams). The multiplexed TS is modulated into an OFDM symbol by a DVB modulator 730 and is transmitted through an antenna.

FIG. 8 is a flow diagram schematically illustrating the construction of the receiver according to the present invention. Referring to FIG. 8, the DVB receiver receives signals through an antenna, and the received signals are subjected to an OFDM demodulation process by a DVB demodulator 805. The demodulated data is divided into an IP encapsulated packet and a MPEG-2 TS packet by a demultiplexer 810. The TS packet is subjected to a series of processes necessary for displaying a corresponding service to users by a data processor 825. The IP encapsulated packet is demodulated into an IP stream by an IP decapsulator 815 and is divided into an ESG stream and a data stream. The data stream is input to the data processor 825, similarly to the TS packet. The ESG stream is input to the ESG processor 820. The ESG processor 820 analyzes received ESG data. When the ESG data is transmitted in the multi-stream mode, the ESG processor 820 detects and analyzes required parameters from the received ESG data, and demodulates the ESG data.

The ESG processor 820 and the data processor 825 output information desired by users to a User Interface (UI) 830 by using the input IP stream.

According to the present invention as described above, in order to transmit ESG data, a DVB system sets a signaling field indicating the use or non-use of a partitioning rule in each IP stream used in a multi-stream mode, so that it is possible to more efficiently transmit the ESG data and demodulate the ESG data.

Although preferred embodiments of the present invention have been described for illustrative purposes, those skilled in the art will appreciate that various modifications, additions and substitutions are possible, without departing from the scope and spirit of the present invention as disclosed in the accompanying claims, including the full scope of equivalents thereof.

## Claims

1. A method for transmitting an Electronic Service Guide (ESG) in a Digital Video Broadcasting (DVB) system, the method comprising the steps of:
collecting ESG data to be transmitted;
setting parameters to be transmitted, and setting the number of IP streams to be used in the multi-stream mode when a multi-stream mode is used in order to transmit the ESG data;
setting a signaling field indicating a use or a non-use of at least one partitioning rule in each IP stream;
setting at least one of a start field value and an end field value for all fields of said each IP stream used according to a corresponding partitioning rule;
encoding a partition declaration field of an ESG initial information container including the set values if setup of the start field value and the end field value is completed,; and
transmitting the encoded ESG data to a terminal.

2. The method as claimed in claim 1, further comprising setting the start field value and the end field value to have a specific value indicating that a corresponding field is not used in a corresponding IP stream.

3. The method as claimed in claim 1, wherein the parameter to be transmitted when the multi-stream mode is used includes a number of used partitioning rules, an overlap indicator indicating if overlap of partitioning exists, a used partitioning identifier, an encoding indicator indicating a scheme in which each partitioning value indicator has been encoded, and a length value indicating length of a field reporting each partitioning value.

4. A method for receiving an Electronic Service Guide (ESG) in a Digital Video Broadcasting (DVB) system, the method comprising the steps of:
receiving basic information necessary for receiving ESG data through an ESG bootstrap session;
determining if the ESG data has been transmitted in a multi-stream mode;
acquiring an IP address of an ESG notification carousel session from the basic information, and confirming a partition declaration field of an ESG initial information container if the ESG data has been transmitted in the multi-stream mode;
confirming the number of IP streams in the multi-stream mode through the partition declaration field of the ESG initial information container, and determining if a partitioning rule is used in each IP stream;
acquiring parameter values from the partition declaration field, and acquiring partitioning information of ESG data transmitted through said each IP stream, the parameter values required when the partitioning rule is used; and
partitioning a specific IP stream to at least one field by using the acquired partitioning information, and selectively demodulating required ESG data from a specific field.

5. The method as claimed in claim 4, wherein, in the step of determining if the partitioning rule is used, a value of a signaling field declared in order to report a use or a non-use of each partitioning is used.

6. The method as claimed in claim 4, wherein, in the step of determining if the partitioning rule is used, if a start field value and an end field value of each field have been set to have a same specific value, it is determined that the partitioning rule is used.

7. The method as claimed in claim 4, wherein the partitioning information includes the number of used partitioning rules, an overlap indicator indicating if overlap of partitioning exists, a used partitioning identifier, an encoding indicator indicating a scheme in which each partitioning value has been encoded, and a length value indicator indicating length of a field reporting each partitioning value.

8. An apparatus for transmitting an Electronic Service Guide (ESG) in a Digital Video Broadcasting (DVB) system, the apparatus comprising:
an IP encapsulator for encapsulating and outputting at least one ESG IP stream including an input data IP stream, a parameter in which a partitioning rule is used in each IP stream has been set, and a parameter required when a multi-stream mode is used;
a multiplexer for multiplexing the encapsulated IP stream and TV streams; and
a modulator for modulating the multiplexed data and transmitting the modulated data to a receiver.

9. The apparatus as claimed in claim 8, wherein, when the partitioning rule is not used in each of the IP streams, a start field value and an end field value are set to have a specific value indicating that the partitioning rule is not used in each of the IP streams.

10. The apparatus as claimed in claim 8, wherein the parameter required when the multi-stream mode is used includes the number of used partitioning rules, an overlap indicator indicating if overlap of partitioning exists, a used partitioning identifier, an encoding indicator indicating a scheme in which each partitioning value has been encoded, and a length value indicating length of a field reporting each partitioning value.

11. An apparatus for receiving an Electronic Service Guide (ESG) in a Digital Video Broadcasting (DVB) system, the apparatus comprising:
a demodulator for demodulating signals received from a transmitter;
a demultiplexer for demultiplexing the demodulated signals and dividing the demultiplexed signals into an IP encapsulated packet and a MPEG 2 transport stream packet;
an IP encapsulator for demodulating the IP encapsulated packet into an IP stream and dividing the demodulated IP stream into an ESG stream and a data stream;
an ESG processor for, when ESG data has been transmitted in a multi-stream mode as a result of analyzing the ESG data, determining if each partitioning rule is used in each IP stream from the ESG data, receiving a parameter required when the multi-stream mode is used, analyzing the received parameter, and demodulating the ESG data;
a data processor for processing the data stream and the transport stream packet; and
a user interface unit for outputting user request information output from the ESG processor and the data processor.

12. The apparatus as claimed in claim 11, wherein the ESG processor determines use or non-use of the partitioning rule by using a value of a field indicating the use or non-use of the partitioning rule within the ESG data.

13. The apparatus as claimed in claim 11, wherein the ESG processor determines use or non-use of the partitioning rule by using a start field value and an end field value of each partitioning rule, and determines that the partitioning rule is used if the start field value and the end field value are set to have a specific value.

14. The apparatus as claimed in claim 11, wherein the parameter required when the multi-stream mode is used includes the number of used partitioning rules, an overlap indicator indicating if overlap of partitioning exists, a used partitioning identifier, an encoding indicator indicating a scheme in which each partitioning value has been encoded, and a length value indicating length of a field reporting each partitioning value.
